# EUROPEAN PATENT APPLICATION

(11) **EP 2 312 767 A1**
(43) Date of publication of application: **20.04.2011**
(21) Application number: 10275032.0
(22) Date of filing: 01.04.2010
(51) Int. Cl.: H04B 7/185

(54) **Broadcast content requests**

(30) Priority: 16.10.2009 GB 0918153; 16.10.2009 EP 09275101
(71) Applicant: Astrium Limited, Stevenage, Hertfordshire SG1 2AS (GB)
(72) Inventor: The designation of the inventor has not yet been filed
(74) Representative: Johansson, Anna Olivia

(57) **Abstract**

An apparatus comprising: a first transceiver for communicating with a set-top box via a first network corresponding to a short-range network; a second transceiver for communicating with a geostationary communication satellite in a second network, the first transceiver being configured to receive information corresponding to a request from said set-top box related to broadcast content, and said second transceiver being configured to transmit a message corresponding to said request to said geostationary communication satellite. The set-top box may comprise a receiver for receiving broadcast content; a transceiver for communicating data, through a short-range network, to a terminal, said terminal being in communication with a content management centre via a geostationary satellite; and an input interface for receiving instructions from a user, the input interface being configured to receive a user input associated with broadcast content, and the transceiver being configured to transmit said user input to said terminal for onward transmission to the content management centre.

## Description

### Field of the Invention

The invention relates to a method and apparatus for allowing users to make requests related to broadcast content. More particularly, but not exclusively, it relates to a set-top box and a modem for forwarding such requests to a communication satellite.

### Background of the invention

A large number of data services including terrestrial television, satellite broadcast television and broadband internet, are available to households. Long-term subscriptions and specialised receiving equipment are often required to obtain access to such data services. As a result, people are often put off using these services.

To alleviate this problem, some television service providers allow customers to subscribe on a pay-as-you go basis that relies on smart top-up cards being inserted into the set-top boxes. However, the customer would still need to obtain and install specialised equipment, such as proprietary decoders, to use the service.

Some data services allow customers to interact with the content. For example, customers may request more content. Additionally, a viewer of a quiz show on television can submit an answer to a question or a viewer of a competition can vote for the preferred contestant. Moreover, a shopper can purchase a product by entering the code of a product found in an on-line catalogue. However, without specialised equipment, such as a computer or a set-top box with a return channel, this is not possible.

The introduction of "smart meters" in homes has been suggested. Smart meters would allow the amount of utilities used by a household to be read remotely. The "smart meters" could also be used for active load management. To carry out meter readings and consumer active load management, the "smart meters" would have to be equipped with a communications return link.

The invention was made in this context.

### Summary of the Invention

According to the invention, there is provided an apparatus comprising: a first transceiver for communicating with a set-top box via a first network corresponding to a short-range network; a second transceiver for communicating with a geostationary communication satellite in a second network, the first transceiver being configured to receive information corresponding to a request from said set-top box related to broadcast content, and said second transceiver being configured to transmit a message corresponding to said request to said geostationary communication satellite.

Said message may comprise a request to subscribe to a future broadcast, a request to access content previously broadcast and stored in the set-top box, a request to purchase a product in a catalogue received as part of a broadcast or a request to top-up an account +held by a user of said set-top box.

The second transceiver may comprise an antenna with a gain of between OdBi and 12dBi.

Said second network may deploy a plurality of forward channels and a plurality of return channels and the apparatus may comprise a controller to control said second transceiver to transmit a random access (RA) message in a first return channel indicating that the apparatus would like to send said message, said second transceiver being configured to receive an instruction message from said geostationary communication satellite in a first forward channels with instruction on how to send said message and said controller being configured to control said second transceiver to send said message in accordance with said instructions. Said instructions may comprise instructions to send said message in a second different return channel. The instructions may further indicate that the transceiver should send said message at a specific time in said second return channel

The message may comprise a first message and the second transceiver may be configured to transmit a second message corresponding to said request to said geostationary communication satellite, the second transceiver being configured to send said message at a predetermined time interval after said first message in said second return channel.

The forward channels and the return channels may comprise a plurality of time slots grouped into a plurality of frames in a predetermined frame structure, said second transceiver being configured to receive said instruction message a predetermined interval after transmission of said random access message, said predetermined interval corresponding to a duration of a predetermined number of frames. Said apparatus may be configured to go into sleep mode during at least a portion of said predetermined interval.

The apparatus may further comprise a memory for storing a unique address of said apparatus and the second transceiver may be configured to transmit said address to said geostationary communication satellite. The second transceiver may be configured to send said address to said satellite in the random access message.

The first transceiver may be configured to communication with said set-top box in a wireless short-range network. The first transceiver may further be configured to communicate with said set-top box in a wired short-range network.

The first transceiver may be configured to communicate with one or more utility meters and transmit meter readings from said utility meters to said geostationary communication satellite. One of said one or more utility meters may be configured to act as a network controller for said first network and said first transceiver may be configured to communicate with said set-top box via said one of said one or more utility meters. Alternatively, said set-top box may be configured to act as the network controller.

According to the invention, there is also provided a set-top box comprising: a receiver for receiving broadcast content; a transceiver for communicating through a short-range network data to a terminal, said terminal being in communication with a content management centre via a geostationary satellite; and an input interface for receiving instructions from a user, the input interface being configured to receive a user input associated with broadcast content, and the transceiver being configured to transmit said user input to said terminal for onward transmission to the content management centre. The user instructions may comprise a request to subscribe to a future broadcast or a request to accessing stored content or a request to purchase. Said receiver for receiving broadcast content may be configured to receive a decryption code for decrypting said future broadcast or said stored content.

Said user instruction may alternatively comprise a request to purchase a product in a catalogue received as part of a broadcast, a request to submit an answer to a question or a vote in a broadcast competition, a request to top-up an account or a request to pay a bill.

The said short-range network may comprise a wireless short-range network or a wired short-range network comprising a plurality of utility meters. One of said utility meters may be configured to act as a network controller of said short-range network and said transceiver may be configured to transmit said data to said network controller for onward transmission to said terminal. Alternatively, the set-top box may be configured to act as the network controller and may be configured to send said data directly to said terminal.

According to the invention, there is also provided a system comprising the apparatus and the set top box. The system may also comprise at least one utility meter. The system may also comprise a geostationary communication satellite in communication with said apparatus. Additionally, the system may comprise a content management centre comprising means for receiving said request and at least one out of means for transmitting a decryption code to a set-top box, means for forwarding a request to purchase a product to a retailer; means for taking payment details; and means for updating the balance on an account of a user.

Furthermore, according to the invention, there is provided a method of operating a set-box configured to receive broadcast content comprising receiving a user request related to broadcast content; transmitting a first message corresponding to said user request, via short-range network, to a modem; receiving said first message in said modem; and transmitting a second message corresponding to said user request from said modem to a geostationary communication satellite in communication with a content management centre for handling said user request.

Yet further, according to the invention, there may be provided a set-top box comprising a receiver for receiving a broadcast; and a transceiver for wirelessly providing a return link to a content management centre managing said broadcast.

### Brief Description of the Drawings

Embodiments of the invention will now be described, by way of example, with reference to Figures 1 to 20 of the accompanying drawings, in which:
Figure 1 shows a communication system for a geographical region;
Figure 2 shows the communication between a communication satellite and a user network in the communication system;
Figure 3 shows an extended communication system for providing data services;
Figure 4 schematically illustrates the components of a modem in the user network;
Figure 5 schematically illustrates the components of a set-top box in the network;
Figure 6 schematically illustrates the components of a control station;
Figure 7 schematically illustrates the components of the communication satellite;
Figure 8 illustrates different types of channels used by the communication satellite and the modem;
Figure 9 illustrates how the modem and the communication satellite communicate in a basic mode of operation, according to some embodiments of the invention;
Figure 10 shows the structure of various messages between the modem and the communication satellite, according to some embodiments of the invention;
Figure 11a and 11b illustrates how the modem and the communication satellite exchange data related to commercial services.
Figure 12 shows the structure of various additional messages between the modem and the communication satellite;
Figure 13 illustrates another mode of operation between the modem and the communication satellite;
Figure 14 illustrates a process carried out in the set-top box;
Figure 15 illustrates a process carried out in the modem;
Figure 16 illustrates a process carried out in the control centre; and
Figure 17 illustrates a process carried out in the content management centre.

### Detailed Description

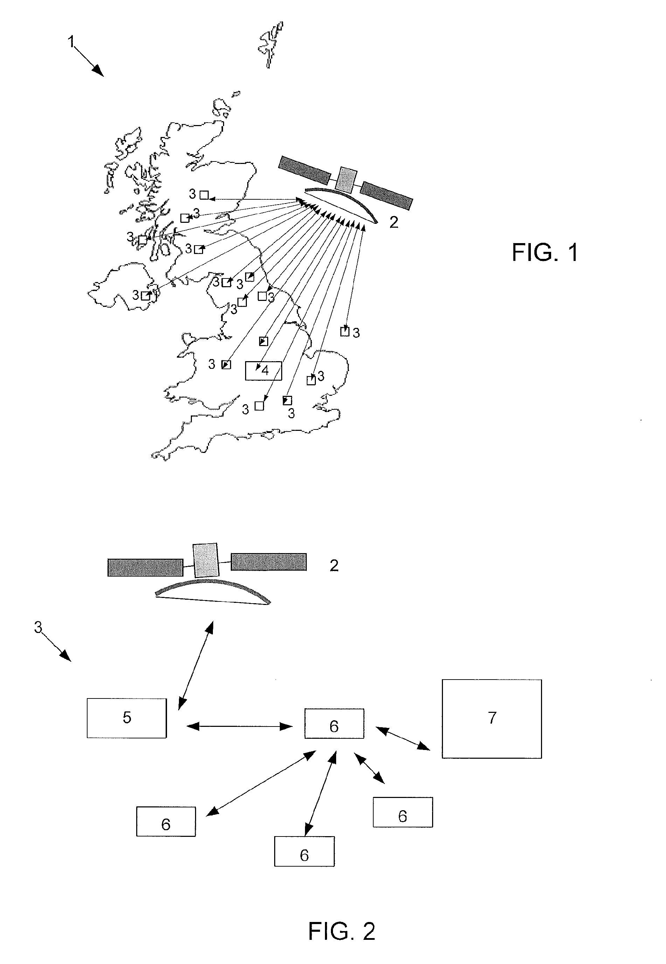

With reference to Figure 1, a communication system 1 comprises a communication satellite 2 in communication with a number of user networks 3 and a data authority 4. For example, the communication system may cover a country or a region of the world. There may be one user network for at least every household or group of households in the country or region of the world. Only a small number of user networks have been shown in Figure 1 but it is contemplated that more than 50 million user networks may be used in the system. Moreover, more than one control station can be used.

With reference to Figure 2, each user network 3 comprises a modem 5 for communicating with the communication satellite 2 in a wide area network (WAN). The user network also comprises a number of devices 6, 7 connected to the modem in a local area network (LAN). The LAN may be a wireless ad-hoc network, including, but not limited to, a Bluetooth network or a ZigBee network. It may also be a wired network. In one embodiment, one of the devices 6, 7 may act as the user network controller that controls the communication in the LAN. The local are network will be described below as a short-range wireless network. However, it should be understood that it can also be a wired network.

The devices comprise a number of sensors and smart meters 6 for monitoring utilities in one or more households and the communication system 1 may provide a utility control system for all households in a particular region or country. The communication system 1 can be used to read gas, electricity and water meters remotely but it can also be used to provide active load management. For example, the system can be used to remotely switch non time-critical loads to enable automatic management of micro generation. It is contemplated that in some embodiments, the user network controller would be the electric meter since this has permanently available mains power.

By using the communication link between the control centre and the television apparatus, the system can also be used as a content distribution system. The devices may comprise a television apparatus and the content distributed through the system can be shown on the television apparatus. In more detail, the system could be used to easily manage subscriptions to broadcast services, to allow users to interact with broadcasts and to carry out catalogue shopping. The data authority 4 may be a single secure data authority that may be linked to one or more grid authorities, broadcasts centres, data services providers and distribution centres.

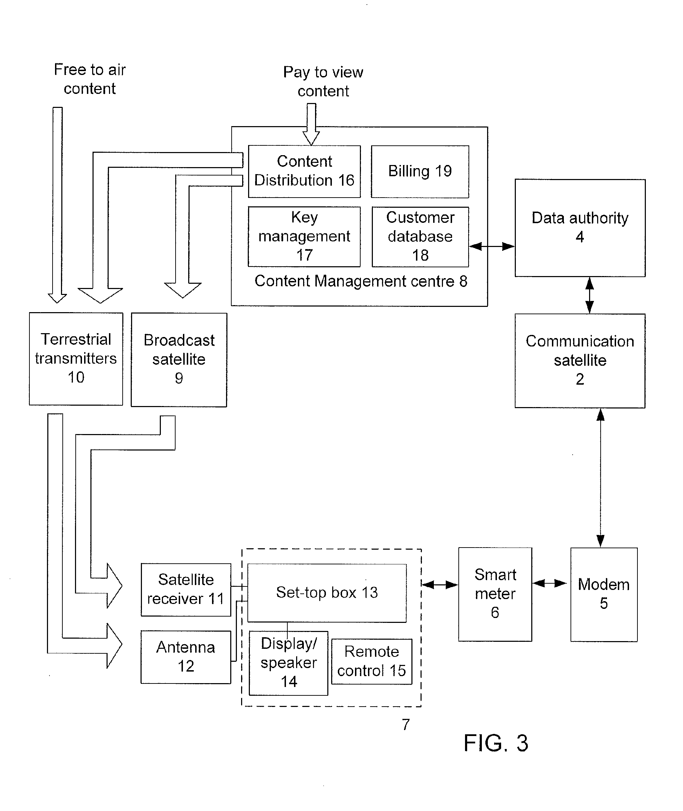

A different, extended, view of the content distribution system is shown in Figure 3. A content manager centre 8 controls the distribution of content. The content is broadcast via a broadcast satellite 9 or a terrestrial link 10 comprising a number of terrestrial transmitters. Some content may be broadcast both via the broadcast satellite 9 and the terrestrial transmitters 10. The terrestrial link may be a digital terrestrial television ultra high frequency (DTT-UHF) channel. The television apparatus 7 is connected to means for receiving the content 11, 12. In some embodiments, the means for receiving a broadcast 11 may be a satellite receiver 11. In other embodiments, the means for receiving a broadcast 12 may be a terrestrial television antenna or aerial 12. In some embodiments, as shown in Figure 3, the means for receiving the broadcast comprises both a satellite receiver 11 and a terrestrial television antennal2. In one embodiment, the satellite receiver 11 is a satellite dish and the terrestrial receiver 12 is a simple directional antenna, such as a YAGI.

The television apparatus comprises a set-top box 13 for decoding the broadcast signal, a TV display and speakers 14 and a remote control 15. The display and speakers 14 receive the decoded signal from the set-top box and display the graphics on the display and output the audio through the speakers. The viewer can change channels, interact with the content and submit subscription requests and payment information using remote control 15.

As described with respect to Figure 2, the television apparatus is also connected, via a smart meter 6 acting as the short-range network controller, to the external modem 5. Alternatively, the set-top box in the television apparatus can act as the short-range network controller and can communicate with the external modem directly. The external modem 5 communicates via the communication satellite 2 with the data authority 4 which in turn can exchange information with the content management centre 8. Content requests, subscription information or payment information entered by the user using the remote control 15 can be forwarded from the set-top box 13 to the content management centre 8 via the short-range network, the modem 5, the communication satellite 2 and the data authority 4.

The content management centre 8 comprises a content distribution module 16, a key management module 17, a customer database 18 and a billing module 19. The content distribution module prepares data to be broadcast. The data may be a television programme. However, it may also be data that is traditionally thought of as only being accessible over the Internet. For example, the content distribution module may broadcast, for example, selected portions of the content available on Wikipedia, data provided by government e-services and newspapers, traffic news and catalogues of products offered by retailers to all set-top boxes in the system. The content may be broadcast at off-peak times and stored for later use. Only time critical content would require routine updates. Content that requires a subscription may be encrypted and stored by the set-top box in encrypted form.

When a user desires a product or service related to a broadcast service, the user may enter a request using the remote control 15, as will be described in more detail below. The request is transmitted to the content management centre 8 via the short range network controller 6, modem 5 and the communication satellite 2. The content management centre 8 receives the requests from the data authority. It then checks the details of the customer in the customer database 18 and, if payment is required, checks if the customer has selected a method of payment or if credit is available. If necessary, the billing unit 19 then takes the payment for the service or product and arranges for it to be delivered.

The request sent to the content management centre 8 may be a request to receive a service to which access is restricted. The service may be a television programme, a news service or any other data service. The service may already have been broadcast or it may be scheduled to be broadcast in the future. The request may be for a single television programme or news article or a subscription for a longer time. The key management module 17 can then issue a decryption key for the customer to access and decrypt the service and the content management centre delivers the key to the customer by any suitable means. In some embodiments, the key is broadcast by the content distribution module via the broadcast satellite 9 or terrestrial transmitters 10. In other embodiments, the key may be sent via the communication satellite 2 and smart meter modem 5.

The request may also be a request to purchase a product advertised in a retailer's product catalogue previously broadcast to the set-top box, in which case the content manager centre arranges for the product to be delivered by contacting the retailer and the appropriate distribution centre.

The request may also be a request to register a vote for a television competition or an answer in a television quiz, in which case the content management centre ensures that the vote or answer is delivered to the programme provider.

The request may also be a request to top-up a balance on an account held by the content management centre for the customer.

The details of the components of the modem 5, the set-top box 11, the communication satellite 2 and the control centre 4 and the details of the messages exchanged between the modem 5 and the communication satellite 2 will now be described below.

With reference to Figure 3, the modem 5 comprises a short range communication antenna 20, a short-range communication transceiver 21 for communicating with the LAN via the short range communication antenna 20, a satellite communication antenna 22 and a satellite communication transceiver 23 for communicating with the communication satellite 2 via the satellite communication antenna 12. The modem further comprises a memory 24 for storing data and computer-executable instructions. The modem 5 also comprises a controller 25 for controlling the short-range communication transceiver 21 and the satellite communication transceiver 23. Additionally, the modem 5 comprises a power source 26. The power source may be a solar cell, a battery or a combination of both. It could also be a connection to a source of mains power. In some embodiments, the satellite communication antenna 22 and satellite communication transceiver 23 may operate in the UHF, L or S bands. At these frequencies the modem antenna may be a simple dipole or patch with a wide beamwidth, which greatly simplifies modem installation. A high gain dish antenna is not required. Other operating frequencies may be used, such as X, C or Ku band, provided the modem antenna can be of relatively low gain, 0 to 12dBi. In some embodiments, to preserve simplicity of installation, the gain in azimuth does not exceed 6dBi but the gain in elevation can be up to 12dBi because a simple spirit level can be used to set the antenna substantially vertical, which in this case may mean within 30degrees.

The memory 24 stores the address 27a, 27b of the modem 5. In some embodiments, the modem belongs to one or more groups. It may also belong to one or more sub-groups within that group. Additionally, it has an address within the group or sub-group. A group may be all modems located in a particular part of the country and a sub-group may be all modems related to a particular utility supplier. However, modems located in particular parts of the country and related to a particular utility supplier may also be split over many different groups. The modems may be grouped in dependence on the network requirements. The address of the modem may be determined as a group address 27a and the specific address of the modem 27b in the group. Alternatively, if the group is divided into sub-groups, the address may be determined as the group address, the sub-group address and the address of the modem in the sub-group. One modem can have more than one address such that it can be addressed through different groups. The memory 24 may also store data corresponding to a plurality of modes of operation of the modem. The modes define how the modem communicates with the satellite. The memory 24 may also store a number of codes and corresponding actions to be performed in the user network 3. Instead of receiving a set of instructions from the communication satellite, the modem may receive a code and the modem may look up the instruction corresponding to this code in memory 24. The codes may be stored in a look-up table in the memory 24. The addresses 27a, 27b, the modes and the actions will be described in more detail below.

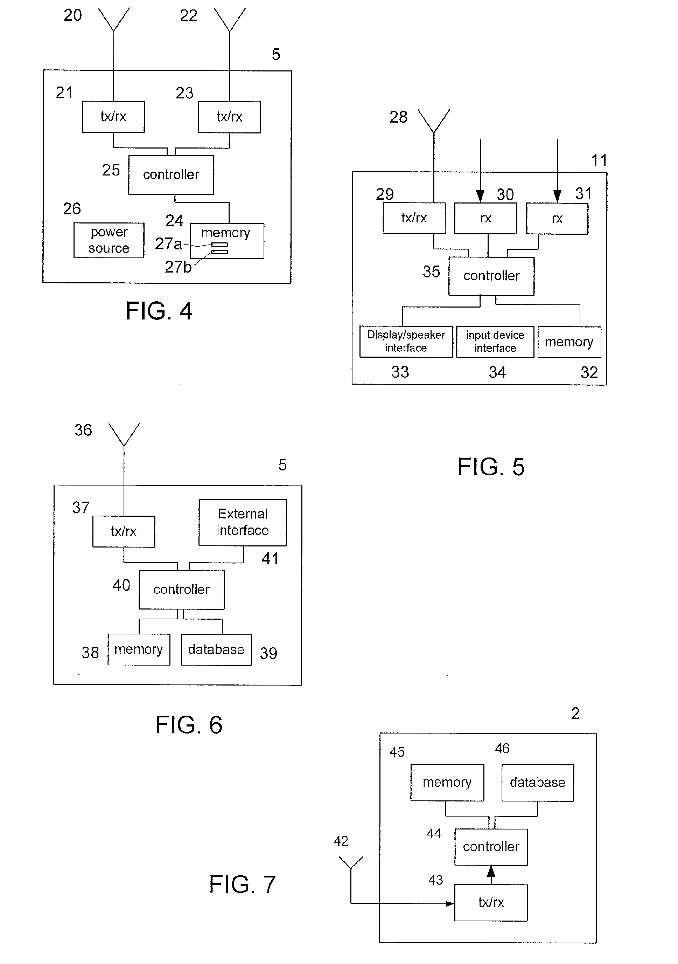

With reference to Figure 4, the set-top box 13 comprises a short-range communication antenna 28 and a transceiver 29 for communicating with the modem 5 via the short-range communication antenna 28. The set-top box also comprises receiver circuitry 30, 31 for processing the signals received via the satellite receiver 11 and the antenna 12. In some embodiment, the set-top box is configured to only decode signals from the satellite receiver 11 and not from a terrestrial satellite aerial and the receiver circuitry only comprises circuitry 30 for decoding signals from a satellite receiver. In other embodiments, the set-top box is configured to only receive terrestrial television, and is not capable of decoding signals broadcast via the broadcast satellite, and the receiver circuitry only comprises circuitry 31 for decoding terrestrial television signals. The set-top box 13 may also comprise a memory 32 for storing data and computer-readable instructions. Additionally, the device may comprise a display and speaker interface 33 for passing information to the display and speaker unit 14. The set-top box may also comprise an input device interface 34 for receiving instructions from the remote control 15. The input device interface 34 and the remote control 15 may communicate using infra-red signals. The set-top box further comprises a controller 35 for controlling the operation of the transceiver and receiver circuitry, the memory, the display interface and the input device interface. In some embodiments, the display and speaker unit 14 and the set-top box may form a single device. In other embodiments, the display and speaker unit may incorporate at least some of the receiver circuitry. In some embodiments, the satellite receiver and terrestrial antenna provide a return link as well. The set-top box may be connected to the main electricity supply.

The smart meters also comprise a short-range communication antenna and transceiver (not shown) for communicating with the modem 5. The short-range communication antenna and transceiver may be similar to the one described with respect to Figure 5. The smart meters 6 and the set-top box 16 receive request for information from the modem 5 via the short-range communication antennas and reply with the requested information. They may also initiate communication with the modem by transmitting a message to the modem 5. Since communication within a short-range network is known it will not be described in detail herein. It is contemplated that any suitable messaging protocol between the modem 5 and devices 6, 7 can be used. An example of a smart meter is a water meter. The water meter may read the amount of water used by the household or the block of flats in which it is installed and send the reading to the modem for transmission to the data authority. It should be realised that a water meter is just one example and the application may additionally or alternatively perform other tasks. The smart meters may also comprise a power source, which, for example, could be an interface to the main electricity supply, a battery, a solar panel or a combination of a battery and a solar panel.

With reference to Figure 6, the control station or data authority 4 may comprise a satellite communication antenna 36 and a satellite communication transceiver 37. The data authority 4 may also comprise a memory 38 for storing data and computer-readable instructions. Additionally, it may comprise a database 39 for storing information about all user networks 3 in the wide area network. For example, it may store the address 27a, 27b of each modem 5 in the WAN and the type of meters and other devices 6 to which each modem 5 is connected. The database 39 would also store the responses from the user networks 3 before the responses are passed on, if necessary, to the relevant institutions and authorities. The data authority 4 may also comprise a controller 40 for controlling the transceiver 37, the memory 38 and the database 39. Additionally, the controller 40 provides the wide area network controller for the wide area network. Some of all of the software may be stored in memory 38 and executed by the controller 40. The network controller controls the communication between the satellite 2 and the user networks 3, instructs the satellite to send messages to the user networks and records the responses received. The data authority also comprises one or more external interfaces 41 for communicating with institutions and authorities interested in sending data to and receiving data from the user networks 3. The one or more external interfaces 41 may be secure external interfaces. As an example, an external secure interface 41 may comprise a firewall for allowing data to be securely communicated. The data authority 4 may be provided as a distributed data processing and storage system or as a dedicated server.

With reference to Figure 6, the communication satellite 2 comprises an antenna dish 42 and a transceiver 43. The communication satellite also comprises a memory 45 for storing data and instructions. Additionally, the communication satellite may comprise a database 46 for storing information about the modems in the network. The information stored in the database 46 may replicate the information stored in the database 39 of the data authority 4 or it may be different to the information stored in the database 39 of the data authority. The database 46 of the communication satellite 2 may be in addition to or instead of the database in the data authority 4. The communication satellite 2 may also comprise a controller 44 for controlling the transceiver 43, the memory 45 and the database 46. The communication satellite 2 may be a geosynchronous satellite in order to provide continuous coverage. The geosynchronous satellite may be a geostationary satellite. However, other types of satellites in other types of orbits are possible.

It should be understood that Figures 3, 4, 5 and 6 are just schematic diagrams and the modem 5, the set-top box 13, the data authority 4 and the communication satellite 2 may comprise additional or fewer components than those described. For example, additional components may be added to fulfil requirements for fault tolerance. It should further be understood that the transceiver and receiver circuitry 21, 29, 30, 31 37, 43 may comprise amplifiers, filters and signal processors, not shown in the drawings. Moreover, the controllers 25, 35, 40 and 44 may be implemented using a single central processing unit or as a distributed processing system. The controllers may be implemented as software or hardware or a combination of both. Additionally, in some embodiments, a separate database 46 is not required in the communication satellite 2.

According to the invention, the communication between the user network 3 and the communication satellite 2 is designed to allow wide geographic coverage with low data rates. The satellite can communicate with more than 50 million separate modems on a single wireless communication link over a given geographical area. To this end, all the modems 5 remain continuously logically connected to the communication satellite 2 but each modem only transmits infrequent millisecond bursts of data with an average data transmission rate of less than 1 bit per second. The single wireless communication link can be considered as a single radio frequency cell.

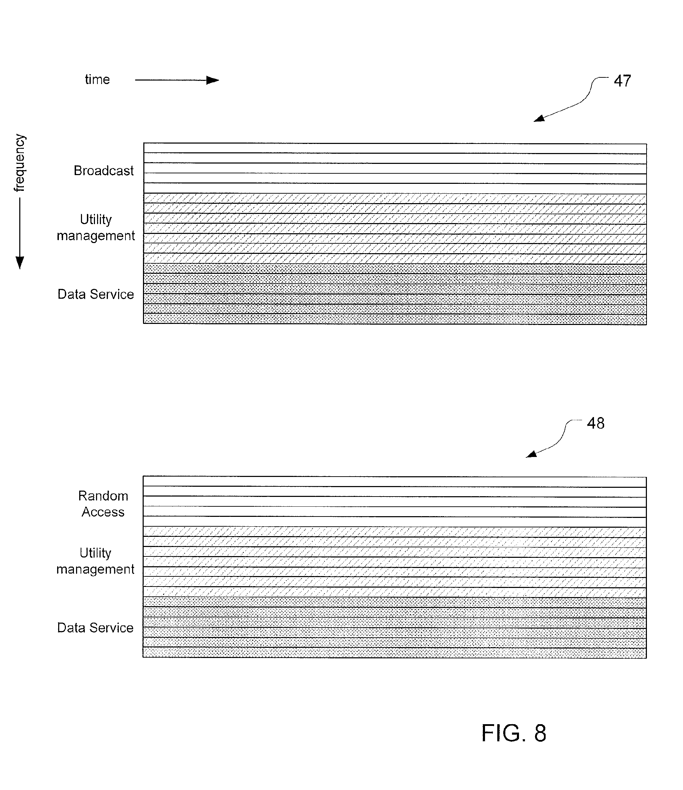

With reference to Figure 8, the wide area network deploys a plurality of forward channels 47 and a plurality of return channels 48. The forward channels and the return channels are provided in different frequency bands. The channels may be frequency channels. Alternatively or additionally, if the wide area network deploys code-division multiplexing, the channels may correspond to different codes.

The channels are divided into a number of control channels for logging onto the system and allocating channels for different activity and a number of traffic channels for exchanging messages required for completing the activities. In the control channels, the forward channels are a broadcast channels and the return channels are random access (RA) channels as will be described in more detail below. In the traffic channels, some of the channels are channels used for utility management and some are used for commercial data service management.

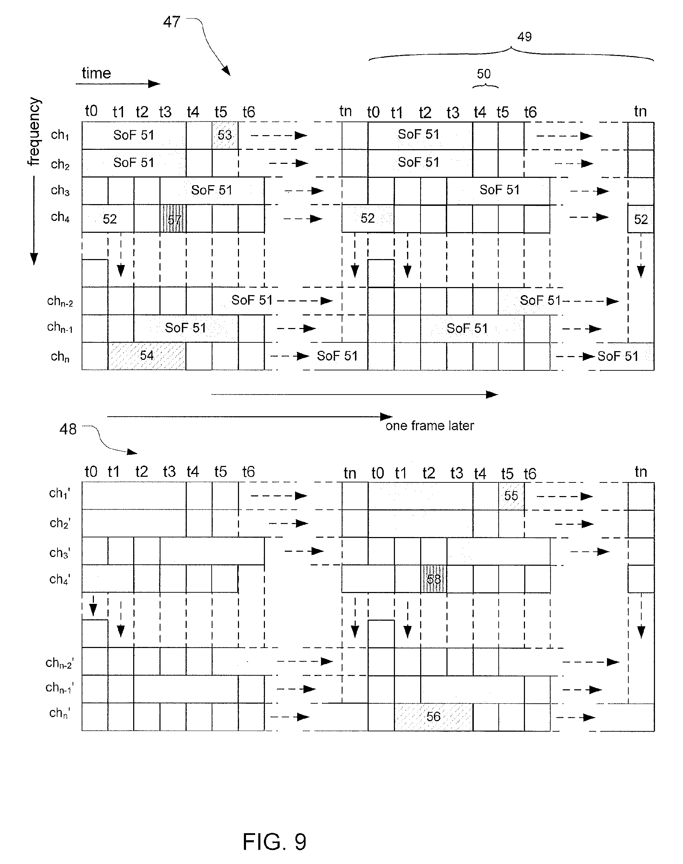

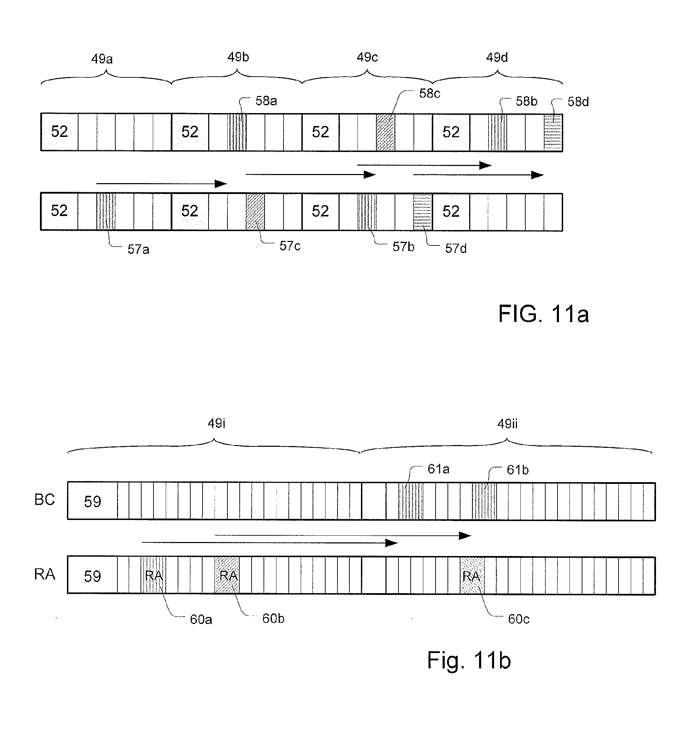

To accommodate all the user networks and to ensure flexibility in the communication if required, all modems are programmed to operate in a number of different modes. Some modems may be configured to operate in modes in which other modems cannot operate. A basic mode of operation is shown in Figure 9. In Figure 9, n forward channels 47 and n' return channels 48 are shown. The fourth forward channel ch₄ and the fourth return channel ch₄' are channels used for commercial data services. The rest of the shown channels are used for utility management. However, as is clear from Figure 8, more than one channel can be used for data service management. Figure 9 does not show any control channels. However, the control channels will be described in more detail below, for example with respect to Figure 11b.

A number of modems are allocated to each channel. In some embodiments, a modem listens to one forward channel at a time. However, in other embodiments, a modem can listen to more than one channel simultaneously. It is contemplated that in some embodiments, a modem can simultaneously listen to at least one utility management channel and at least one commercial data service channel. In the description of the basic mode of operation below, it will be described that the modem only listens to one channel at a time. However, it should be realised that it can listen to more than one channel at a time.

Each channel is divided into frames 49 comprising a plurality of time slots 50. In some embodiments, the frame length is not fixed. Instead, the number of time slots per frame can be varied as will be described in more detail below. In Figure 9, the numbering of the time slots, t₁ to tₙ, is shown with respect to the frames of the first and the second channels in the forward and return channels 47, 48. This numbering will also be used to refer to the time slots in the other channels.

In the forward channels 47, each frame starts with a broadcast message burst 51, 52 from the communication satellite 2. The broadcast message bursts 51, 52 indicate the start of a frame and will hereinafter be referred to as a start of frame (SoF) message. As shown in Figure 9, the frames and the SoF messages do not have to be aligned between the different channels. In Figure 9, the SoF message 51 of a utility management channel spans four time slots 50 but this is just an example and the SoF message can be shorter or longer than four time slots. The duration of a SoF message 52 of a data service channel may be shorter for reasons that will be described in more detail below. Since spectrum resources are limited, only a limited number of modems can be active at any one time. If a modem is not trying to send a broadcast service request on a data service channel, the modem listens to the forward communication traffic on the utility management channel which it has been allocated and synchronises with the frame structure using the SoF messages. If the SoF message indicates that a message for the modem will follow, the modem continues to remain active and listen for messages. However, if the SoF does not indicate that a message for the modem will follow, the modem goes into a low power standby or sleep state and only wakes up again in time to listen to the next SoF message 51 in the allocated utility management channel. If the modem wants to send a broadcast service request on a data service channel, the modem listens instead for the SoF messages on the data service management channel.

The communication in the utility management channel will now be described. The communication in the data service channel will be described in more detail later. The SoF message 51 of the utility management channel addresses a group of modems or a sub-group of modems using the group and sub-group addresses 27a of those modems and specifies the time to the next SoF message in that channel. The modems in the particular target group then prepare to receive their individual commands. The modems that have not been addressed on any of their allocated channels go into sleep mode and wait for the next SoF message 51, unless they are exchanging messages on the data service channel. Since a large number modems are in sleep mode at any one time, power consumption is reduced.

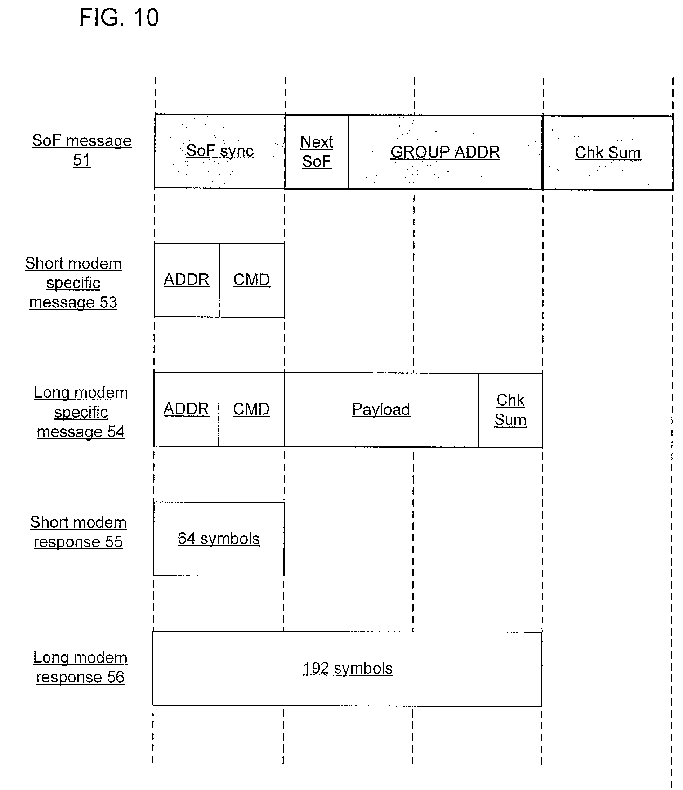

In the basic mode of operation, after the SoF message 51 the satellite 2 commences to transmit in the utility management channel modem specific messages 53 and 54 to the modems 5 in the target group/sub-group. The beginning of a modem specific message 53, 54 is coincident with the beginning of an integer number of time slots 50. The modems addressed in the SoF message 51 listen for messages addressed to them and note the time slot in which the messages were transmitted. The message includes the address 27b of the modem in the group/sub-group and a command. The command may be communicated as a short code or as a longer set of instructions as will be shown in more detail with respect to Figure 10. All modems addressed in the SoF message listen to the modem specific messages that follow the SoF message but a specific modem only notes the time slot of a message if the message comprises the address 27b of that modem. In one example, the message may be transmitted in a single time slot 50 and may comprise an instruction to a specific modem to submit meter readings. However, other types of instructions and longer messages are also possible as will be described in more detail below.

As a result of the specific communication structure and the use of group, sub-group and specific modem addresses 27a, 27b, the network can efficiently address any specific meter at any time. If the network controller needs to send an urgent message to a specific modem, it only has to wait until the next frame. The specific messaging structure also allows many of the modems to be in sleep mode a large proportion of the time, resulting in power savings. Additionally, data overheads are reduced in the modem specific messages by using the group address 27a in the SoF message 51 and only the short specific address 27b of the modem in the group in the modem specific message 53, 54. Since a smaller amount of data needs to be transmitted in each modem specific message, the satellite can communicate with each modem more frequently.

The modem notes the instructions and the time slot in which the message 53 and 54 was transmitted and, if a response is required, transmits its response 54, 56 in the return channel 33 corresponding to the forward channel 47 in which the message was received. In some embodiments, the modem transmits the response to a message exactly one frame after the message was transmitted. In Figure 9, arrows indicating the time between the modem specific messages 53, 54 and the responses 54, 56 show that the time between a modem specific message and the corresponding response is equal the duration of the frame in which the message was transmitted. Since each modem that receives a modem specific message has been informed in the SoF message 51 that preceded the modem specific message when the next SoF message will be transmitted, it can determine the length of the frame in which the modem specific message was transmitted and also when to transmit a response. Since all modems in the target group have listened to all the messages for that group and the responses are transmitted one frame later, the timing structure for the return channel frame precisely matches that of the preceding forward channel frame. This avoids problems associated with the transmit start-up timing that would occur if the timings were close together in a particular frame. Also, it means that the modem does not receive and transmit messages at the same time. This avoids the need for a diplexer and associated loss of signal strength in the connection to the modem antenna. Additionally, it has the advantage that the information transmitted in the modem specific messages 53 and 54 can be further reduced because the message does not have to include data indicating the time slot in which the modem is permitted to transmit a response. Instead, the modem is programmed to transmit the response exactly one frame 49 after the first time slot in which the modem specific message was received. Moreover, the network controller knows from which modem a response was transmitted by determining the time slot in which the response was transmitted. However, it should be realised that other timing arrangements may be used.

A number of different types of modem specific messages and modem responses will now be described. In some embodiments, the modem specific messages may be short modem specific messages 53 or long modem specific messages 54. Similarly, the modem may respond with either a short response 55 or a long response 56. Typically, the modem responds with a short response 55 to a short message 53 and a long response 56 to a long message 54. However, it should be realised that in other embodiments, only one or some of these types of messages and responses may be used. Moreover, other types of messages, not specifically described herein may also be used.

As shown in Figure 9, the satellite 2 transmits a short modem specific message 53 to a particular modem in time slot t5 of the first frame in channel ch₁. This modem subsequently transmits a short response 55 to the satellite exactly one frame 49 later in frequency channel ch₁'. The short modem specific messages 53 and the short response 55 can each fit into a single time slot and are sufficient for the most common and simplest instructions and responses, such as requests and responses to requests for meter readings or instructions to turn on or switch off a device or a circuit supplied by the device. Short modem specific messages 53 comprise instructions in the form of a code. The modem 5 looks up the instructions corresponding to the code in memory 11. Consequently, for the most common instructions, the length of the instructions can be reduced to a code and can fit into a single time slot.

As further shown in Figure 9, a particular modem receives a long modem specific message 54 over three time slots starting at time t₁, in the first frame in frequency channel Chₙ. The modem subsequently responds to the message exactly one frame later in message 56, starting at time t₁, in frequency channel chₙ'. In some embodiments, the length of the response 56 is equal to the length of the long modem specific message 54. Long modem specific messages and responses are used for more complicated and less common instructions. Long modem specific messages may for example comprise instructions to adjust the temperature of a room, switch on or off a device which is not a very common type of device or a request for details about a fault reported by the modem. A long modem specific message may be used to allocate a modem to a specific data service channel for the first time or to instruct a modem to switch to a new data service channel. However, the modem may also be informed about the details of the data service channels in a broadcast via the terrestrial transmitters or broadcast satellite and the set-top box. Long modem specific messages 54 may also be used to upgrade the short message command set used by a modem or to instruct the modem to change utility management channels. The modem response 56 may comprise information requested in the long message 54 or confirmation that the instructions have been carried out.

With reference to Figure 10, the structure and length of the different fields in the SoF messages 51, the modem specific messages 53, 54 and the response 55, 56 are shown. Each time slot corresponds to a fixed number of bits. Asymmetric data rates may be used for the forward channels 47 and the return channels 48 and a time slot 50 in the forward channels 47 may be able to communicate a different number of bits to a time slot 50 in the return channel 48. A reason for this is that whereas the output power of the communication satellite 2 may be limited by the power capabilities of existing satellites used for implementing the system, the power output of the modems 5 is only limited by the available power transistors used to manufacture the modems. The data rate in the return channels 48 is typically higher than the data rate in the forward channels 47. However, the data rate in the return channels may also be lower. As an example, the data rate in the return channels may be four times the data rate in the forward channels. The modem 5 may, for example, be able to receive 16 bits (2 bytes) in a time slot 50 in the forward channels and transmit 64 bits (8 bytes) in a corresponding time slot in the return channels. For purposes of illustration, this example will be used to describe the structure of the modem messages and response below. However, it should be realised that the data rate can be increased or decreased or the duration of a time slot can be changed so that a higher or lower number of bits can be communicated in a single time slot. Moreover, it should be realised that the structure of the SoF messages 51 and the modem specific messages 53, 54 and responses 55, 56 can be different.

As shown in Figure 10, the SoF message 51 comprises a synchronisation field for allowing terminals to synchronise with the satellite. The length and structure of the synchronisation field will be determined by the requirements of the modem receive circuits. For most modems, 2 bytes is sufficient as shown in Figure 10. The first two bytes may be followed by 8 bits for the next frame field, indicating when the next frame will start. The SoF message 51 also includes a group address field which includes the address 14a of the group and possibly also a sub-group for which a frame is intended. To allow the satellite to address a very large number of modems, 24 bits may be allocated to this field. Consequently, the modems may be grouped into more than 16 million groups. It is contemplated that each terminal may belong to more than one group. The first portion of the group address field may indicate the main group and the last portion of the field may indicate a sub-group. The last 2 bytes of the SoF message may be used for a checksum to check the integrity of the SoF message 51. The number of bytes used for the checksum depends on the acceptable error rate. For non-life threatening applications 2 bytes is normally sufficient. By changing the value in the next frame field, the time until the next SoF message can be varied. As a result, the timing of the SoF messages in a particular channel can be changed and the SoF messages in different channels may not be aligned. In some embodiments, the SoF message 51 may also include a field indicating the type of the channel (not shown). For example, the field may indicate whether the channel is a control channel, a utility management channel or a data service channel.

As further shown in Figure 10, if the modems are allocated in groups of 256 modems, a short modem specific message 53 needs 1 byte of address information for addressing the 256 modems. The modem specific message may further comprise 1 byte for indicating a short command. The command is communicated using a code to minimise the amount of data that has to be sent. The modem 5 would look up the code and realise that it is request for a meter reading from one of the connected devices 6. For example, the message may be a request for a reading from the electricity meter. Other examples include requests for interrogating other devices, such as "status", "credit", "peak reading" and "average reading" requests. Additionally, the message may be instructions to a modem to confirm its address. A short message can be sent to all modems in the group by setting the address field to a particular value, for example, zero.

As further shown in Figure 10, a long modem specific message 54 may comprise 1 byte of address information for the particular modem in the group for which the message is intended. It may also comprise a command field. Accordingly, up to and including the command field, the structure of the long modem specific message 54 is the same as the structure of the short modem specific message 53. The command field is long enough to specify 256 different codes. In some embodiments, one or a few of these codes may indicate that a long set of instructions will follow and thereby inform the modem that the command is part of a long modem specific message 54. The rest of the codes may correspond to stored instructions for short modem specific messages. The command field in the long modem specific message is followed by the payload, comprising the instructions, and a check sum. The long message is shown in Figure 10 to take up 3 slots. However, it should be realised that the long modem specific message may take up fewer or additional time slots. For some instructions, the long modem specific messages may take up a very large number of time slots. The duration of the long modem specific message 54 is only limited by the frame length. The long modem specific message 54 cannot be longer than the frame in which it is transmitted. A long modem specific message 54 can be sent to all modems in the group by setting the address field to a predetermined value, for example, zero.

Referring to Figure 10 again, a short response 55 is the length of one time slot 50. In the example described above, wherein there are sixteen bits per time slot, the short response can therefore comprise 64 bits. Since the response is sent exactly one frame after the short modem specific message 53, the network controller knows which modem sent the response and none of the bits have to be used to identify the modem. Therefore, in theory, all the available bits can be used to transmit data from the modem 6. In reality, guard intervals between the responses may be used and slightly fewer than 64 bits are available for information from the modem. However, this is more than sufficient to transmit a meter reading. In fact, it may be sufficient to transmit more than one reading. A typical electromechanical household electricity meter can record 1,000000 kWh over its life. This corresponds to 20 bits in the message field. Consequently, even if 8 bits are used for guard bits, the remaining 56 bits are more than enough to transmit two meter readings or one reading and other information. Moreover, in practice it is likely that only the change since the previous reading would be transmitted. Consequently, a short response may be sufficient to transmit two or more meter readings.

Referring to Figure 10 yet again, the duration of a long response 56 is equal to the duration of the long modem specific message 54 to which the long response is a reply. Consequently, using the example of Figure 9 and Figure 10, if the long modem specific message 54 is three time slots long, the long response is also three time slots long. Moreover, using the example of 64 bits per time slot, the long response may comprise 192 bits as shown in Figure 10. Again, some of the bits may be used in guard intervals between messages and slightly less than 192 bits may be available for the reply from the modem. A long response 56 may be required if there is a fault with one of the meters and the long modem specific message has requested the modem to transmit details of the fault.

In some embodiments, the average data rate in each forward channel is lower than 1kbits/s and the average data rate in each return channel is lower than 4kbits/s. As a specific example, a typical existing satellite may transmit 250kbps over a bandwidth of IMH_{z}. If the bandwidth is divided into 1024 frequency channel, the data rate on each channel is just under 250 bits/s. With the required 16 bits per slot, there are just over 15 slots per second. To achieve a data rate that is four times higher in the return channels, the modems would have to be configured to transmit at a data rate of approximately 1 kbits/s per channel. This can be achieved, for example, by using power components that are able to transmit 1000kbps over a bandwidth of 1MH_{z}, divided into 1024 channels. It should be realised that these figures are only given as an example. The bandwidth may be divided into a larger or smaller number of channels. Moreover, if the power components for the modems have a lower power or higher power, the bandwidth used for the return channels may be varied to achieve the required relative data rate. For example, the bandwidth of each return channel may have to be increased to support a data rate of lkbits/s per channel. The numbers of modems supported by each channel may have to be changed accordingly.

Using the simplest mode of operation wherein each modem in a group of 256 modems is addressed with a modem specific short message in a particular frame and using the example in which the SoF message takes up 4 slots, 260 slots are required to address all the modems in a group. Furthermore, using the example above of a data rate of 250bits/s for the forward channels and 1000bits/s for the return channels, a frame would consequently be just over 17 seconds. Any modem in the network can therefore be addressed within 17 seconds. However, it should be realised that the duration of a frame varies with the data rates used for the forward and return channels. Moreover, if 256 modems are addressed every 17 seconds in a specific channel, that channel can address more than 50 000 modems in an hour. Considering that there are more than 1000 frequency channels, the system can therefore address every modem in a network of 50 million user networks in less than an hour. If every modem transmits a short response of 64 bits every hour, a modem has a transmit data rate of less than 0.02 bits per second. This can be considered as an Extremely Low Data Rate message which is orders of magnitude slower than can be accommodated by current commercial systems. In a system designed to control the supply of utilities to households, updates for a particular meter would only be required on a daily basis. Consequently, the system also has capacity for data service channels for managing subscription services, access to broadcast data services and ordering and payment of products advertised in catalogues.

In a more typical example, a frame would normally comprise slightly more than one slot per message to allow for a small number of long modem specific messages and long responses. It is therefore contemplated that a typical frame would last approximately 20s. Moreover, if many of the modems in the group require longer messages it is possible that not all messages in the group are addressed in the frame. The next frame field in the SoF message may also be used to adjust the number of slots in each frame.

If long modem specific messages 54 are required for a large number of modems allocated to a particular channel, the update rate for the other modems on that channel will be lower than the average rate. In some circumstances, the network controller may store a lower limit for the update rate for the modems on a particular channel. For example, the lower limit may correspond to the minimum update rate of meter readings required by a grid authority or a particular supplier. If the network controller determines that there is a high risk of the update rate for one or more modems falling below the lower limit in one channel, it may move one or more modems on that channel to a new channel. The new channel may have a different lower limit or no limit at all. The network controller may determine that there is a high risk of the update rate for one or more of the modems falling below the lower limit on a particular channel by analysing the messages waiting to be transmitted to the modems allocated to that channel. A modem 5 can be moved to a new channel by sending the modem a long modem specific message 54 with instructions to switch channels as mentioned above. It was further mentioned above that more than one value in the command field of the short and long modem specific messages may be used to indicate that the modem specific message is a long modem specific message. In some embodiments, one of these values may correspond to a code indicating to the modem that it should change channel. The modem then knows that the details of the new channel are provided in the payload field. If there are approximately 1000 different channels, 10 bits would be enough to specify the number of the new channel. Consequently, using the example of 16 bits per time slot, only two time slots, or 32 bits, would, in some embodiments, be required to send a long modem specific message with instructions for a modem to switch to a particular channel. After the modem has switched to the new channel, it remains on until it picks up the next SoF message in the new channel. If the modem needs to transmit a message it transmits a message in the return channel corresponding to the forward channel to which it was instructed to switch. In some embodiments, the long modem specific message instructing the modem to switch channels indicates the details of both the new forward channel and the new return channel. In other embodiments, the long modem specific message only indicates the new forward channel and the modem determines the corresponding return channel or it only indicates the new return channel and the modem determines the corresponding forward channel. A forward channel and the corresponding return channels may have corresponding addresses. If the channels are frequency channels, the modem can switch channels by tuning in to a new frequency channel. A message with instructions to switch channels can be sent to all modems in the group by setting the address field to a predetermined value, for example, zero. By instructing one or more modems to switch channels when there is too much traffic on a channel, the network controller provided by the controller 25 of the data authority 4 can ensure that the system operates property and that the system does not crash.

It should be realised that the structures of the messages described in Figure 10 is only an example. For example, each group can comprise more than 256 modems, requiring an address field of more than 1 byte. In the extreme case, all modems in a particular channel may be addressed/allowed to respond at least once in each frame. This means that in a network of 50 million modems, where each channel supports 50,000 modems, each frame would include approximately 50,000 slots. Using the example described above with 15 slots per second, a frame may be up to an hour long. However, with such long frame lengths, the network may not react quickly enough to events in the system. In some embodiments, a very long frame may be used, but all modems are still required to wake up and listen to messages bursts from the satellite at predetermined intervals in case a new mode of operation is required.

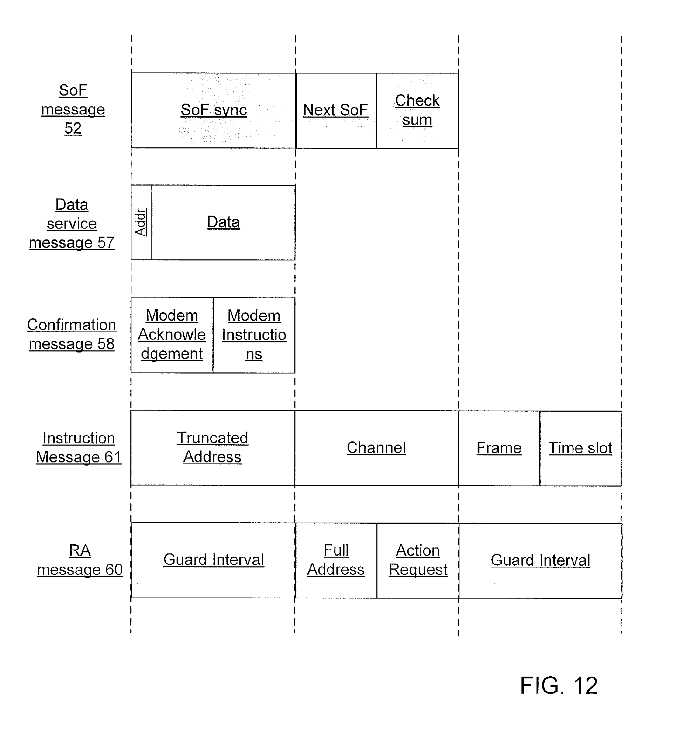

The communication in the data service channels of Figure 8 and 9 will now be described with respect to Figures 11a, 11b and 12. The network controller does not know whether a modem wants to transmit a request for a data service and a modem therefore has to tell the communication satellite that it wants to send a number of messages corresponding to a request for a data service. The network provider can then allocate a data service channel in which the modem can transmit the request. Figure 11a show a forward and a return data service channel and the messages exchanged to communicate the request related to broadcast content. Figure 11b shows a forward control channel and a return control channel in which the modem can inform the network controller that it wants to transmit a message and be allocated a set of data service channels for transmitting the messages. As in the utility management channel, the timing structure for the return channel frame is decided by the SoF messages in the forward channel.

With reference to Figure 11a, a forward data service channel comprises a plurality of SoF messages 52, as already described with respect to Figure 9, for allowing the modems to synchronise with the frame structure in the data service channels. The modem transmits the request related to broadcast services in a number of messages 57a to 57b and receives acknowledgements in a number of acknowledgement messages 58a to 58b from the communication satellite. With reference to Figure 11b, a broadcast control channel also comprises a plurality of SoF messages 59 for allowing the modem to synchronise with the frame structure in the control channels. The communication satellite receive random access (RA) message 60a, 60b, 60c in the random access control channel corresponding to the broadcast control channel and responds with instructions messages 61 a, 61b with instructions on how to transmit further data.

The messages in the control channels will be described first. The messages in the data service channels will subsequently be described. A modem initiates communication with the network controller by synchronising with the SoF message 59 in a broadcast channel and subsequently sending a message 60a in a random access slot in a random access channel corresponding to the broadcast channel informing the network controller that it has information to send to the network controller. The random access message 60a may include the full address of the modem and a code corresponding to one of a number of actions. In this example, the code may correspond to a request to transmit a message related to broadcast content. The code may also be more specific and relate to, for example, a request to purchase a product advertised in a retailer's catalogue, a request to top up an account at the content management centre, a request to obtain a subscription to a television channel or a request to submit a vote . The network controller responds a fixed number of frames later with an instruction message 61 a comprising instructions on how to send the broadcast content request. In Figure 11b, the network controller responds exactly one frame later, as shown by the arrows. However, in practice it is likely that it will take the network controller longer than one frame to process the request and prepare a response. Since the modem knows when the network controller will respond it can go into sleep mode and wake up in time to synchronise with the frame in which it expects to receive an instruction message. It is contemplated that in some embodiments, the frames are of fixed length such that the modem knows how long it can wait before it has to wake up. The instruction message 61a may include a truncated address of the modem and details of a channel and a time in the channel when the modem can send its request to the network controller. Since only a limited number of modems will send random access messages to the satellite at any one time, a truncated address will be sufficient. As seen in Figure 11b, more than one random access message 60a, 60b may be transmitted in each frame from different modems. If the modems try to send random access messages at the same time, one or both of the modems may fail to send their messages. The SoF message 59 may include details of a back off coefficient indicating how long the modems should wait to attempt to send a message if the first transmission fails. The back off coefficient may be determined based on the number of modems that are trying to initiate communication with the network controller. The modem uses the back off coefficient to determine a period to wait until it attempts to transmit a random message again. Moreover, if a large number of modems are trying to send random messages, the SoF message may indicate that the modems should try another pair of control channels. For example, it may include a parameter that allows the modem to randomly choose another broadcast and random access channel.

The messages in the data service channels will now be described with respect to Figure 11a. Once the modem has been allocated a channel and a time to transmit the data service request, it moves to the allocated data service channel. It synchronises with the SoF message 52 in the forward data service channel and then waits for the frame and the time slot in which it has been instructed to send its message. In some embodiments, it may be instructed to send its message 57a in the next frame. In other embodiments, it may be instructed to wait for a number of frames. If it is instructed to wait, it may power down and wake up in time to synchronise with the SoF message in the allocated frame. Different modems may be instructed to wait a different number of frames. For example, as shown in Figures 11a and 11b, the modem that sent the first random access message 60a in the random access control channel is allocated a slot in the next frame in the data service channel. The modem that sent the second random access message 60b is instructed to wait to the second frame. However, if there is room in the first frame, the modem that sent the second random access message may also have been allocated a slot in the first frame. It is contemplated that all frames of a specific channel have a fixed frame length. The modem is informed of the frame length in the SoF message and knows when it has to wake up to send its message. In one example, the frame may be long enough to accommodate message exchanges with five different modems, where each modem is allocated one time slot each. However, other frame lengths are possible.

The modem sends its first data service message 57a at the allocated time in the allocated frame. As shown in Figure 11a, the modem may have been allocated the second time slot. The network controller subsequently sends an acknowledgement message 58a exactly one frame later. The acknowledgement message may include a truncated address of the modem and an instruction to send further data if required. If the modem has additional data to send, it sends additional data in a second data service message 57b exactly one frame later and receives another acknowledgement 58b in the next frame. The modem continues to send data service requests in alternating frames until it has sent all the data it desired to send. As seen from Figure 11a, another modem can send a data service request 57c in the frame when the first modem is listening for acknowledgement messages as implied above, since the satellite can both receive and transmit messages at the same time. The satellite replies to the data service request of the second modem exactly one frame later. Moreover, different modems can send data service requests in the same frame. For example, a third modem can send a data service message 57d in the same frame as the first modem sends its second data service message 57a.

With reference to Figure 12, the structure and length of some of the different messages exchanged in the data service channels and the control channels according to some embodiments of the invention are shown. As described with respect to the message in the utility management channel, each time slot 50 corresponds to a fixed number of bits and asymmetric data rates may be used for the forward channels 47 and the return channels 48. Continuing with the example described with respect to Figure 10, a modem may be able to receive 16bits (2 bytes) in a time slot 50 in the forward channel and transmit 64 bits (8 bytes) in a corresponding time slot in the return channels. However, as mentioned earlier, it should be realised that any suitable structure and data rates can be used for the messages.

The SoF message of the data service channel may comprise a synchronisation burst of 2 bytes. The next field indicates the length of the frame by indicating when the current frame ends and/or the next frame starts. It is contemplated that 8 bits should be more than sufficient for this field. The SoF message ends with a check sum of, for example, 8 bits. Since the SoF message 52 in the data service channel does not include a group address, it is shorter than the SoF message 51 in the utility management channel. The SoF message may also include a field indicating the type of channel (not shown) as described with respect to the SoF message 51 in the utility management channel in Figure 10.

The data service message may comprise 8 bytes including 1 byte for the address and 7 bytes for the specific data service request. The first byte may only include the truncated address since the network controller already knows when to expect the message and only a limited number of modems would be transmitting data service requests in that channel at the same time. The purpose of the address is for the network controller to confirm that the correct modem is transmitting a message in the allocate frame.

The other 7 bytes of the data service request 57a may include a small number of bits for specifying the type of the request. For example, the message may specify whether the request is a request to purchase a product in a catalogue, a request for access to a news service or a television programme, a request to register a vote for a contestant in a competition in a television programme or a request to top-up the balance of the customer's account. The rest of the 7 bytes and any further data service messages 57b may be used to specify the code corresponding to the specific request. The code may correspond to a particular television programme or news service. The customer may not see the code when the customer selects the programme or news service but the set-top box may store a code corresponding to the programme or news service and may forward the code to the modem when the selection is made. The code can also be a product code corresponding to a product in a retailer's catalogue. Additionally, the code may correspond to an answer in a televised quiz or a contestant in a televised competition. The code may include a number for the TV programme and a number corresponding to the answer or the contestant. If the request is a request to purchase a product, the data bytes may also include delivery details. For example, the customer may have previously registered one or more addresses and the data in the message may indicate to which of the previously registered addressed the product should be delivered. If the request is a request to top-up an account, the data bytes may only include the code informing the content management centre 8 that the customer wants to top up the account.

A portion of the 7 bytes and further data service messages 57b, as required, may also be used to inform the content management centre how the customer would like to pay for the service. The payment details may include details of the credit or debit card which the customer would like to use. The modem can transmit all the details necessary to set up a new payment method. Alternatively, the user may have registered a number of cards previously and the data service request messages may include an indication of which of the cards the customer would like to use to pay for the service. If the user would like to register a new payment card, it may need to transmit more than one data service message. According to some embodiments, the data services can also be paid for by buying a scratch-card. The payment details may then include the pin from the scratch card. A customer may buy a scratch card for a particular service, such as a particular programme, a series of programmes, or access to a particular channel for a limited time. Alternatively or additionally, the customer may buy a scratch-card to top up a balance on an account used for various types of services. The customer may then enter the pin by using the remote control to the set-top box and the set-top box may forward the pin to the modem to be transmitted. Some services may be free in which case no payment details are transmitted. As mentioned above, if the modem cannot transmit all the details of the request in a single data service message it sends another message in a subsequent frame. It should be realised that 8 bytes is just an example and the data service message may be longer or shorter.

With reference to Figure 12, since the acknowledgement message 58 in the forward channel is transmitted exactly one frame later, it can take up as many time slots as the data service request. In the example of Figures 11a and 12, in which the data service request takes up 1 time slot, the acknowledgement message would also take up one time slot. Using the example of a data rate in the return channel of four times the data rate in the forward channel, the acknowledgement message can include 16 bits. This is sufficient for the network provider to allow, for example, 8 bits for the truncated address of the modem as a confirmation that the message from the modem has been received and 8 bits instructing the modem that it can send its next message. In some embodiments, the satellite does not need to send an acknowledgement message in every frame. Moreover, in some embodiments, the data service message and the acknowledgement can be shortened by, for example, not including the address of the modem in the messages.

As an example, if a frame in the data service channel can include message exchanges with five different modems, the SoF message in the data service channel include 32 bits and the messages to the modems include 16 bits each, a frame includes 14 bytes. Using a data rate of approximately 250 bits/s, two frames could be sent every second. Consequently, the satellite can exchange messages with 10 modems every second in any channel.

With further reference to Figure 12, the instruction messages 61 in the broadcast channel may comprise 6 bytes each and may therefore span three time slots each, using the data rates described above. Each instruction message may include 2 bytes for the truncated address, 2 bytes for specifying a channel for the modem to transmit the data service message, 1 byte for specifying a frame and 1 byte for specifying a time slot. It should be realised that these are only approximate numbers and in some embodiments, a shorter message can be used. For example, if only the four last digits of the address are used, 8 bits should be more than enough for the truncated address. Moreover, if the modem can use the next frame and each frame only includes 5 time slots, the frame and the time slot can be indicated in half the space shown in Figure 12. Consequently, the instruction message may only be 2 time slots long. Even shorter messages or longer messages may also be used

An RA message 60 only needs to include the full address of the modem. It may also include details of the type of request it would like to make. Using the example described with respect to Figure 10, 32 bits is sufficient to specify the address of the modem. Out of the 32 bits, 24 bits may be used for the group address 27a and the last 8 bits may be used to specify the specific address 27b of the modem within its group. Consequently, the address would only take up half a time slot in the return frame. The rest of the random access may be used to specify the action requested. For example, the system may allow the modem to use one of a number of codes to specify what kind of request the modem wants to make. If the system uses 256 different codes, another 8 bits may be required for the modem to specify what type of request it would like to make. Since the instruction message is sent exactly one frame later and only one modem can be instructed at a time, the duration of the period allocated to a single random access message is equal to the duration of the instruction message. Consequently, in the example of Figure 12, a random access message can span 3 time slots. In those time slots only one modem can send a random access message. If two modems try to send random access messages, both would fail and would have to try again later. Consequently, the available time is long enough for all the data the modem would like to submit in the random access message. The random access message may also include guard intervals. As shown in Figure 12, the actual data transmission of the RA message does not have to start at the beginning of the slots available but can be transmitted at any time in allocated period.

It should be realised that control channels may be used not only for initiating data service requests but also for logging on to the system initially. Additionally, the control channels may also be used when the modem needs to contact the network controller in an emergency. Different codes in the RA messages may be used for different tasks.

Figure 12 does not show the structure of the SoF 59 in the control channel. However, the SoF message may be of similar length to the SoF messages in the utility management channel and the data service channel. It is contemplated that in some embodiments it would be longer and it can be of different lengths in the different types of control channels. The SoF 59 may include a number of synchronisation bits, the time to the next frame and a check sum. It may also include the type of the channel. There may be different control channel types. As described above, some control channels may be used for initiating data service requests related to broadcast content and other control channels may be used for logging on to the system for the first time. Yet other control channels may be used for initiating communication with the network provider in case of emergencies. In the case where the control channel is used to initiate data service requests, the field would indicate that the broadcast control channel and its corresponding random access channel are control channels for initiating data service request. It should be noted that in some embodiments, there would only be one type of control broadcast channel with corresponding random access channels and all requests to initiate communication with the satellite would be sent in the same type of random access channels. The SoF message 59 may also include a back-off coefficient. The back-off coefficient may indicate how long the modem should wait until it attempts to transmit the random access message again. Depending on how many modems are trying to transmit random access messages at the same time, the network controller may include a back-off coefficient indicating a longer or a shorter waiting time. The SoF message may also include an indication of how busy the control channel is to allow the modem to select another pair of control channels. The SoF message may also indicate the corresponding random access control channel.

If the control channel is a log-on control channel, the SoF message may also include information about the network. The information may include information identifying the network and timing information giving details of, for example, compensation for delays on an area basis. If the same type of control channel can be used for all types of requests, all SoF messages would include this information.

It should be realised that the length of the messages described in Figure 12 are only an example. Longer or shorter messages may mean a smaller or larger number of messages per frame or longer or shorter frames. Longer frames would carry less synchronisation overhead and permit greater flexibility in packing the messages, but at the expense of a more complicated timing structure.

Moreover, it should be realised that the message structure described with respect to the data service channel is only one example. In another example, the structure in the data service channel can be more like the structure in the utility management channel. Moreover, a modem may be moved from a data service channel described above to a channel using a structure similar to the utility management channel in some circumstances to transmit some types of data. In some situations, the modems desiring to transmit data service requests may be included in a new group and moved to a new channel. The data can then be exchanged in the new channel using short and long modem specific messages.

For clarity's sake, consecutive frames in each channel are shown to be of equal length in Figure 9, 11a and 11b. However, it is of course possible, that consecutive frames are of different length. Frames in different channels may also be of different lengths. A variable frame length is particularly important for the utility management channels in which the number of short and long modem specific messages and responses may vary depending on the information that needs to be exchanged and the variable frame length allows the messages to be packed more efficiently. The length of the frame is adjusted in the Next SoF field in the SoF message 51 of the utility management channel, in dependence on a number of factors, including but not limited to, the number of modems in the group, the type of messages to be transmitted in that group and the length of those messages. Dummy messages may have to be inserted between the frames to adjust the timing of messages in the forward and return channels. The use of dummy messages to adjust the timing of messages in the forward and return channels is described in EP09275101.5. This document also describes additional modes of operation and flexible features of the system.

As mentioned above, in some embodiments, the modems are not configured to receive and transmit at the same time. The network controller therefore takes steps to ensure that the modem does not have to receive and transmit message in the same frame. For example, in the data channels that are operated according to the message structure described with respect to the utility management channel, the network controller can also ensure that a group of modems is not addressed in consecutive frames. If the SoF message in the second forward frame was sent to a group which includes the modem that received the short modem specific message 53 in the first forward frame, that modem would have to transmit a response to the short modem specific message while listening to the modem specific messages in the second forward frame. By addressing different groups in consecutive frames, the modems do not have to receive and transmit at the same time. Moreover, in the embodiments wherein the modems listen to at least one utility management channel and at least one data service channel at the same time, the utility management channels may be synchronised with the data service channels such that the modems do not have to receive and transmit at the same time in different channels. Additionally, the network controller can ensure that a modem does not have to send messages in both channels at the same time.

Also, the modem may be configured to always give precedence for either utility management messages or broadcast content requests. In some embodiments, the network controller 5 in the short-range network may ensure that data service requests from the set-top box 13 are not sent to the modem when the modem is expecting or has received instructions to submit data from the network controller. However, it should be realised that in embodiments where modems are manufactured to receive and transmit at the same time, a different alignment between frames can be used. Also, in that case a modem may be addressed in every frame. Moreover, when a modem can simultaneously transmit or simultaneously receive in two channels, the alignment of frames between the channels can be modified further.

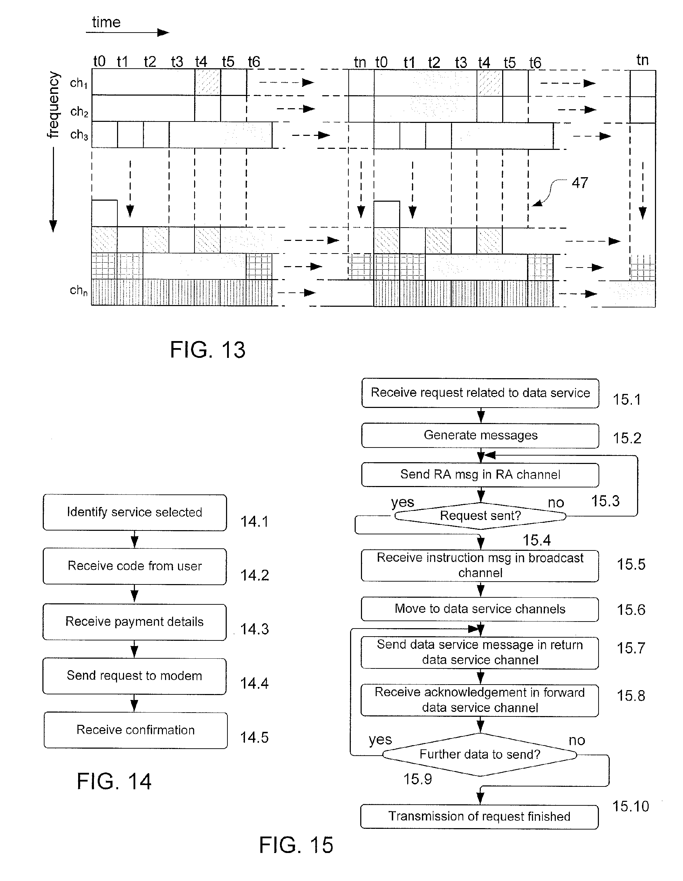

Another mode of operation will now be described with respect to Figure 13. It is contemplated that some modems need a higher update rate than other modems. For example, some modems may serve a whole block of flats and need to send meter readings more frequently than other modems. The modems are therefore divided into different classes depending on the update rates required. Different channels may be used for different classes of modems. The majority of modems belong to the basic class that only transmit a single burst of data in a given frame. As shown in Figure 13, channel Ch, is used for this type of modems. Channel Chₙ_₂ is used for two modems that transmit in alternating frames. Channel Chₙ_₁ and Channel Chₙ show the extreme case when one modem transmits continuously. Moreover, by altering the value in the next SoF field in the SoF messages 51, 52, the modems can continue to transmit over a large number of slots over an extended period. For the utility management channels, since all the modems that belong to a specific group of modems remain on throughout the frame in which they were addressed, this mode of operation may be implemented by the modem being sent more than one modem specific message in each frame. If responses are required, the modem submits a response to each message exactly one frame after the receipt of the message. For the data service channels, the modems may be instructed to send longer data service messages.

Some modems are allocated channels that allow them the higher update rates described with respect to Figure 13 when they connect to the system. For example, different modems may be used for different applications and the system will determine the class of modem when the modem logs on and allocate an appropriate channel. However, some modems may only require a channel with a higher update rate temporarily. For example, a mode of operation wherein a modem and the satellite exchange more than one message per frame may be required when a modem has to transmit a relatively large amount of information. A higher update rate can be required both for utility management messages and broadcast content requests. For example, if a new subscription is set up to access a new e-service, the e-service provider may require a large amount of information from the subscriber. A modem can then temporarily be moved into a channel where the modem can be given a higher update rate and be operated either according to the data structure described with respect to Figures 9 and 10 or the data structure described with respect to Figures 11a, 11b and 12. In the new channel, the network controller may use a single frame to request, for example, the type of the payment card, the number of the payment card, the name on the card, the expiry date and the security code over a number of messages. The modem transmits the requested details exactly one frame after the receipt of the messages. A long modem specific message in the utility management channel can be used to transfer a modem temporarily or permanently to a new channel. For the exchange of information related to broadcast content requests, an acknowledgement message can also be used to transfer the modem to a channel with a higher update rate.

It will now be described how modems that wish to join the network establish initial communication with the network controller. A control channel as described with respect to Figure 8 and 11b may be used. The modem has prior knowledge of which frequency is being used for the log-on broadcast control channel and "listens" for the regular SoF messages. Once the modem 5 has synchronised with the frame structure, it attempts to transmit a random access log on message. The modem 5 selects a particular access slot at random and transmits, amongst other data, its identification details. It may also transmit details of utility suppliers and its geographical area to allow the network controller to allocate it to specific groups. If this response is received successfully by the network then an instruction message is sent a fixed number of frames later, as described with respect to Figures 11b. The acknowledgement will be similar to the instruction message 61 described with respect to Figure 11b and 12 but it is likely to be longer. It will contain the identification details of the terminal and the one or more addresses 27a, 27b that have been allocated by the network to the particular modem 5. The modem stores these addresses in memory 11. The instruction message may also comprise individual timing, frequency and power control information for the modem. Additionally, the instruction message may allocate one or more specific channels to the modem. The network controller may allocate a single channel corresponding to a utility management forward channel. Because the modem knows which return channel corresponds to the forward channel, the modem knows in which return channel to send responses to messages in the utility management channel. Alternatively, the network controller may include details of both the forward channel and the return channel in the acknowledgement 64. The network controller may also inform the modem of a broadcast control channel and its corresponding random access control channel to use to initiate data service requests related to broadcast content.

If the identification details of the modem are not recognised, the instruction message may include instructions to the modem not to attempt to connect to the network again. Should the connection message clash with another connection message from another modem that is also trying to establish communication at the same time then neither modems would receive an acknowledgement. Both would then make another attempt in different slots selected at random from the log on channel. At any particular time, provided that there are more available slots than modems trying to establish communication, then the likelihood of clashes remains low.

New modems are allocated to existing channels. When all the channels are full, the system can be modified to support further modems by allocating more bandwidth. Additionally, or alternatively, the system can be modified to support further modems by reducing the update rate on some or all of the existing channels and allocating a larger number of modems to the channels.

As described above, the broadcast and random access control channels can also be used by modems to send emergency unscheduled utility management messages to the satellite. The broadcast and random access control channels may also be used b the modems to send non-urgent unscheduled messages to the satellite. If the network controller determines that many modems belonging to the same group attempts to transmit unscheduled messages on the random access channels, it can instruct the group to transmit messages in one of the traffic channels in time slots allocated to the modems using modem specific messages. By allocating random access time slots and random access channels and by instructing modems 5 that try to send random access messages to send messages in specific time slots, if suitable, the network controller can ensure that the system does not jam or crash.

It should be understood that the messages related to data broadcast services can also be created and submitted in a number of ways. One process for creating and sending the messages will now be described below.

With reference to Figure 14, the set-top box monitors at step S14.1 the instructions received by the user and determines whether the user is viewing, for example, a page corresponding to a retailer's catalogue or is viewing a television programme guide. The instructions may be a code corresponding to an option shown on the screen. The user may enter, using the remote control, a selection by highlighting an option and pressing a button, or choosing a number corresponding to an option. The set-top box may store a code corresponding to the option and may retrieve the code in response to the option being selected. Alternatively, the user may enter the code using the remote control. If the user is trying to top-up a balance using a scratch-card, the user would enter a code corresponding to the pin on the scratch-card. Since the set-top box knows which page the user was viewing, the set-top box knows whether the code is a number corresponding to a subscription of a specific television programme or news service, a number of a product in a catalogue, a number corresponding to a vote in a competition or an answer in a quiz or a pin on a scratch-card. The set-top box receives and stores details of the type of the code and the code in memory at step S14.2. The set-top box may then display a page allowing the customer to choose a payment method. Again, the customer may select a payment method by choosing an option or entering new information using the remote control. The new information may be new payment card details or the pin on a scratch card. The set-top box receives and stores the payment details at step S14.3. The set-top box then sends details of the type of code and the code to the modem 5 at step S14.4. The set-top box may receive confirmation at a later stage at step S14.5. The confirmation may be received via the broadcast satellite or terrestrial transmitters. Alternatively, it may receive confirmation via the broadcast satellite 2 and the modem 5.

With reference to Figure 15, the modem 5 receives the data service request and payment details at step S15.1. It then generates the messages to be transmitted to the satellite at step S15.2. For most messages, a small number of data service request messages 57 would be sufficient to send the whole request. The modem also generates the RA message 60. The modem then synchronises with the control channel and attempts to transmit the random access message in the next frame at step S15.3. The modem checks at step S15.4 whether the transmission was successful. For example, a lot of modems may be trying to send requests at the same time. If the transmission was successful, the modem waits for an instruction message 61 from the network controller. If the transmission was not successful, the modem uses the back-off coefficient received in an SoF in the control channel to determine how long to wait until attempting to transmit the RA message again at S15.3. Steps S15.3 and S15.4 are repeated until the RA message is sent. If one of its attempts to send the RA message is successful, it receives an instruction message a predetermined number of frames later at step S15.5.

The modem checks the instruction message 58 to determine where and when it can send the data service request message and moves to the allocated channel at step S15.6. It then waits for the allocated frame and time slot and sends the first of the data service request messages 57 at step S15.7. It then receives an acknowledgement message 58 at step S15.8. If a single data service request message was sufficient for the whole data service request, the modem notes at step S15.9 that no further data service messages are required and the task is completed at step S15.10. The modem may then go back to its allocated utility management channel. If all the data did not fit into one data service request message, steps S15.7 to S15.9 are repeated until the whole data service request has been sent.

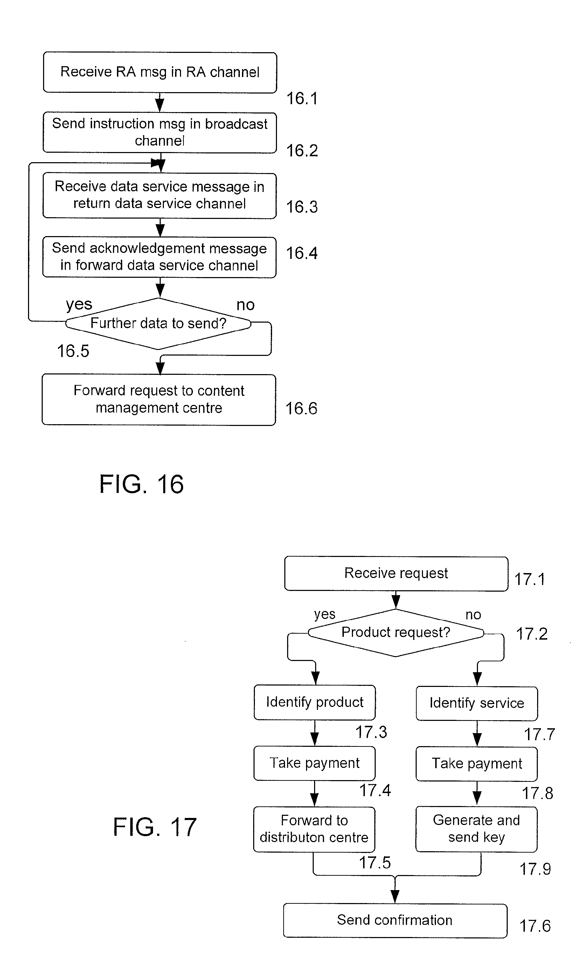

With respect to Figure 16, the communication satellite receives the RA message at step S16.1. The network controller then processes the request in the random access message 60, determines an appropriate data service channel and time slot and generates an instruction message 61. The satellite sends the instruction message 61 at step S16.2 The communication satellite then receives the data service message at step S16.3 in the data service channel and the satellite sends an acknowledgement message at step S16.4. If further data service messages are detected in the time slot in subsequent frames at step S16.5, steps S16.3 to S16.4 are repeated until all the data the modem desired to communication has been received by the satellite and communicated to the network controller. The network controller then forwards the data service request including the payment details to the content management centre 8 via the data authority at step S16.6.

With reference to Figure 17, the content management centre 8 may receive the message comprising the data service request and the identification number at step S17.1. It is then determined, at step S17.2, whether the request is to get access to a data service or to obtain a product advertised by a data service based on the code in the data service request. If it is determined that the data service request is a request to purchase a product, the content management centre 8 identifies the product at step S17.3 based on the product code. The content management centre then determines from the data sent from the network controller how the customer would like to pay and the billing module 19 takes the payment at step S17.4. The content management centre 8 then determines where the product is to be delivered and forwards instructions to the distribution centre at step S17.5. It then sends a confirmation to the set-top box, via for example the broadcast satellite or the terrestrial transmitters, that the order has been despatched at step S17.6.

If the data service request instead is a request for a service that can be delivered electronically, the content management centre identifies the service at step S17.7, takes the payment at step S17.8 and generates and submits the decryption key to allow the customer to access the service at step S17.9. The content management centre may then send a confirmation, via the broadcast satellite or the terrestrial transmitter that the encryption key has been sent at step S17.6. Alternatively, the set-top box may take the receipt of the decryption key as confirmation. The process shown in Figure 17 only covers some of the data service requests. If the request is a vote or an answer to a quiz (not shown in Figure 17), the content management centre may forward the information to the appropriate organisation and send a confirmation to the set-top box. If the request is a request to top-up the balance of an account, the content management centre may top-up the balance and send a confirmation to the set-top box.

Whilst specific examples of the invention have been described, the scope of the invention is defined by the appended claims and not limited to the examples. The invention could therefore be implemented in other ways, as would be appreciated by those skilled in the art.

For example, it should be realised that the message structure described with respect to the data service channel is just one example. For example, the random access message include an indication, in addition to the address of the modem, the amount of data it wants to transmit and the network controller can then determine a suitable channel and a suitable messaging structure for transmitting the data. Moreover, in some embodiments, the modems may send the whole broadcast content request in a random access message instead of waiting for the network controller to let the modem know when the broadcast content request can be transmitted. It should be realised that the system provides a flexible structure and different modes of operation can be used depending on the type of data and the circumstances of the modems transmitting the data.

Moreover, although a separate set-top box has been described, the set-top box may be integrated with the display and speakers to form an integrated television apparatus.

Additionally, the devices may include, in addition to the smart meters and the set-top box, other devices that provide other functions. For example, the devices may include burglar alarms and other sensors for monitoring the condition of frail people in their homes or the condition of perishable materials. Additionally, the modems and the devices are not limited to be installed in households. They may be installed in, for example, warehouses, ships and museums and may monitor high value items or conditions such as the temperature of power line conductors or local wind speed.

Moreover, a different timing structure to the one showed in Figure 9, 10, 11a, 11b and 12 may be used. Additionally, the modem and the satellite are not necessarily limited to sending messages and responses one frame later in the utility management channel and the data service channels. Instead, modem specific messages in the utility management channel may also include instructions about which time a response can be sent. Alternatively, or additionally, the response may include the address of the modem to allow the satellite to determine the origin of the response. Moreover, the duration of a response from a modem in the utility management channels does not have to be determined by the duration of the message received by that modem from a satellite. The duration of a response can be different to the duration of the initial message. Moreover, acknowledgement message in the data service channels may be sent at any time after the receipt of the data service message and may indicate a time when the next data service message can be sent.

Moreover, although it has been described that the modems are allocated to specific channels, it is possible that all the modems listen to all the channels. This would make it easier to address a modem on a new channel since the modem would not have to be instructed to switch channels first. It is further possible a modem can listen on one channel or on all the channels based on the mode of operation. For example, a modem may be instructed to listen on all channels for a predetermined time period or until instructed to only listen to one or a few channels again.

Furthermore, although the modem has been described as a separate terminal to the other devices 6, 7 in the user network 3, the modem could be combined with one of the other devices 6, 7.

Moreover, although it has been described as advantageous for the modems not to receive and transmit data at the same time, the modems can of course be configured to receive and transmit data at the same time in some embodiments.

Additionally, it should be understood that further modes of operations than the ones described herein can be used. A modem can be upgraded to use a new mode of operation. For example, a modem can be instructed to switch to another channel and on that channel receive one or more long messages for upgrading the modem to operate in a new mode of operation. If a modem is instructed to operate according to a mode of operation in which it is not configured to operate, it may go into sleep mode and wake up at the beginning of the next frame in that channel.

## Claims

1. An apparatus comprising:
a first transceiver for communicating with a set-top box via a first network corresponding to a short-range network;
a second transceiver for communicating with a geostationary communication satellite in a second network, the first transceiver being configured to receive information corresponding to a request from said set-top box related to broadcast content, and said second transceiver being configured to transmit a message corresponding to said request to said geostationary communication satellite.

2. Apparatus according to claim 1, wherein said message comprises a request to subscribe to a future broadcast, a request to access content previously broadcast and stored in the set-top box, a request to purchase a product in a catalogue received as part of a broadcast, or a request to top-up an account held by a user of said set-top box.

3. Apparatus according to claim 1 or 2, wherein said second transceiver comprises an antenna with a gain of between OdBi and 12 dBi.

4. Apparatus according to any one of the preceding claims, wherein said second network deploys a plurality of forward channels and a plurality of return channels and the apparatus comprises a controller to control said second transceiver to transmit a random access message in a first return channels indicating that the apparatus would like to send said message, said second transceiver being configured to receive an instruction message from said geostationary communication satellite in a first forward channels with instruction on how to send said message and said controller being configured to control said second transceiver to send said message in accordance with said instructions.

5. Apparatus according to claim 4, wherein said instructions comprise instructions to send said message in a second return channel of said plurality of return channels, and preferably said instructions comprise instructions to send said message at a specific time in said second return channel.

6. Apparatus according to claim 5, wherein said message comprises a first message and the second transceiver is configured to transmit a second message corresponding to said request to said geostationary communication satellite, the second transceiver being configured to send said message at a predetermined time interval after said first message in said second return channel.

7. Apparatus according to claim 4 or 5, wherein said forward channels and said return channels comprise a plurality of time slots grouped into a plurality of frames in a predetermined frame structure, said second transceiver being configured to receive said instruction message a predetermined interval after transmission of said random access message, said predetermined interval instruction corresponding to a duration of a predetermined number of frames.

8. A set-top box comprising:
a receiver for receiving broadcast content;
a transceiver for communicating data, through a short-range network, to a terminal, said terminal being in communication with a content management centre via a geostationary satellite; and
an input interface for receiving instructions from a user, the input interface being configured to receive a user input associated with broadcast content, and the transceiver being configured to transmit said user input to said terminal for onward transmission to the content management centre.

9. A set-top box according to claim 8, wherein the user instructions comprises a request to subscribe to a future broadcast or a request to access stored content or a request to purchase, and preferably said receiver for receiving broadcast content is configured to receive a decryption code for decrypting said future broadcast or said stored content.

10. A set-top box according to claim 8 or 9, wherein said user instruction comprises a request to purchase a product in a catalogue received as part of a broadcast, a request to submit an answer to a question or a vote in a broadcast competition or a request to top-up an account.

11. A system comprising:
the apparatus of any one of claims 1 to 6, and
a set top box according to any one of claims 8 to 10.

12. A system according to claim 12, further comprising at least one utility meter in communication with said set-top box and said apparatus in said short-range network.

13. A system according to claim 13, further comprising a geostationary communication satellite in communication with said apparatus.

14. A system according to claim 11, 12 or 13, further comprising a content management centre comprising means for receiving said request and at least one out of means for transmitting a decryption code to a set-top box, means for forwarding a request to purchase a product to a retailer; means for taking payment details; and means for updating the balance on an account of a user.

15. A method of communication user requests related to broadcast content comprising:
receiving a user request related to broadcast content in a set-top box;
transmitting a first message corresponding to said user request to a modem;
receiving said first message in said modem; and
transmitting a second message corresponding to said user request from said modem to a geostationary communication satellite in communication with a content management centre for handling said user request.
